# EUROPEAN PATENT SPECIFICATION

(11) **EP 3 742 816 B1**
(45) Date of publication and mention of the grant of the patent: **21.02.2024**
(21) Application number: 18917814.8
(22) Date of filing: 10.05.2018
(51) Int. Cl.: H04W 72/542, H04W 76/16, H04W 52/36, H04W 92/20

(54) **COMMUNICATION APPARATUS**
KOMMUNIKATIONSVORRICHTUNG
APPAREIL DE COMMUNICATION

(43) Date of publication of application: 25.11.2020
(73) Proprietor: NTT DOCOMO, INC., Chiyoda-ku Tokyo 100-6150 (JP)
(72) Inventor: TOEDA, Teruaki, Tokyo 100-6150 (JP); UCHINO, Tooru, Tokyo 100-6150 (JP); HANAKI, Akihito, Tokyo 100-6150 (JP); MURATA, Naoya, Tokyo 100-6150 (JP)
(74) Representative: Hoffmann Eitle
(86) International application number: PCT/JP2018/018217
(87) International publication number: WO 2019/215894

(56) References cited:
- EP-A1- 2 854 460
- EP-A1- 3 065 454
- WO-A1-2015/063962
- WO-A1-2015/113600
- WO-A1-2015/171038
- CATT et al.: "Measurement result exchange between nodes", 3GPP TSG-RAN WG2#99 R2-1707887, 20 August 2017 (2017-08-20), XP051317823,

## Description

### TECHNICAL FIELD

The present invention relates to a radio communication system where user equipment communicates with a plurality of communication apparatuses.

### BACKGROUND ART

In Third Generation Partnership Project (3GPP), standards of a new radio communication system referred to as New Radio Access Technology (NR) system are currently under discussion as a successor of a Long Term Evolution (LTE) system or an LTE-Advanced system. It is noted that NR may be also referred to as 5G.

In the NR system, it is expected that LTE-NR dual connectivity (LTE-NR DC) or multi-RAT dual connectivity (MR DC) will be introduced, where data are divided between an LTE base station (eNB) and an NR base station (gNB), and then the data are simultaneously transmitted or received by these base stations, as with dual connectivity in an LTE system.

In the NR system, it is also expected that a plurality of distributed units (DUs) will be attached to one central unit (CU) for extension, as architecture of a radio access network. In this architecture, functional separation (CU-DU functional separation) between the CU and the DU is implemented. For example, the CU has a function of a packet data convergence protocol (PDCP) layer and the DU has functions of a radio link control (RLC) layer and lower layers.

Patent Document 1 relates to a radio communication system includes a first base station that manages a first cell, a second base station that manages a second cell, and a radio terminal, wherein the radio terminal supports dual connectivity involving a bearer split in which a first network bearer between the radio terminal and a core network is split over the first base station and the second base station.

### [Prior-Art Documents]

### [Non-Patent Document]

[Non-Patent Document 1] 3GPP TS38.425 V15.1.0 (2018-03)
[Non-Patent Document 2] 3GPP TS38.331 V15.1.0 (2018-03)
[Patent Document 1] EP 3 065 454 A1

### DISCLOSURE OF INVENTION

### [PROBLEM(S) TO BE SOLVED BY THE INVENTION]

With respect to downlink (DL) in the configuration of LTE-NR DC or MR DC or the configuration of CU-DU functional separation, a node (the node hosting PDCP) with the function of the PDCP layer can identify a DL status from a node (the corresponding node) with the functions of the RLC layer and lower layers. This is disclosed in Non-Patent Document 1 as a downlink data delivery status (DDDS) procedure for reporting a DL status, for example. Using this procedure, an acknowledgement status or the like of a packet (for example, a PDCP PDU) can be reported to the node with the function of the PDCP layer.

However, the related art does not consider that an uplink (UL) status is reported to the node with the function of the PDCP layer. Without an UL status, when the node with the function of the PDCP layer needs to transmit UL data to a plurality of communication apparatuses (an eNB, a gNB, a DU, and so on), the node may transmit the UL data to a communication apparatus with poor quality, and consequently a transmission efficiency of UL data may be decreased.

In view of the above-mentioned problem, it is an object of the present invention to provide a technique for improving a transmission efficiency of UL data in a radio communication system where user equipment communicates with a plurality of communication apparatuses.

### [MEANS FOR SOLVING THE PROBLEM(S)]

In a disclosed technique, there is provision for a first communication apparatus including:
a reception unit configured to receive, from a second communication apparatus, information about uplink quality between a terminal and the first communication apparatus and information about the uplink quality between the terminal and the second communication apparatus as information about uplink quality of the terminal, when the terminal communicates with the first communication apparatus via the second communication apparatus; and
a control unit configured to control uplink data transmission by the terminal based on the information about uplink quality of the terminal.

### [ADVANTAGEOUS EFFECT OF THE INVENTION]

According to a disclosed technique, a transmission efficiency of UL data in a radio communication system where user equipment communicates with a plurality of communication apparatuses can be improved.

### BRIEF DESCRIPTION OF THE DRAWINGS

Fig. 1 is a first configuration diagram of a communication system according to an embodiment of the present invention.
Fig. 2 is a second configuration diagram of a communication system according to an embodiment of the present invention.
Fig. 3 is a third configuration diagram of a communication system according to an embodiment of the present invention.
Fig. 4 is a fourth configuration diagram of a communication system according to an embodiment of the present invention.
Fig. 5 is a diagram illustrating an example of signaling between user equipment and a base station.
Fig. 6 is a diagram illustrating an example of a PHR MAC CE format.
Fig. 7 is a schematic diagram illustrating UL data transmission control.
Fig. 8 is a configuration diagram of user equipment UE.
Fig. 9 is a configuration diagram of a base station MN or SN.
Fig. 10 is a configuration diagram of a central unit CU.
Fig. 11 is a configuration diagram of a distributed unit DU.
Fig. 12 is a diagram illustrating an example of a hardware configuration.

### DETAILED DESCRIPTION OF THE PREFERRED EMBODIMENTS

With reference to the accompanying drawings, an embodiment of the present invention is described below. Note that the embodiment described below is merely an example, and the embodiment to which the present invention is applicable is not limited to the following embodiment.

In the embodiment described below, terms used in the existing 3GPP documents are used for convenience. However, objects specified by those terms may be differently named.

### (System Configuration)

Exemplary configurations of a radio communication system where user equipment communicates with a plurality of communication apparatuses are described below.

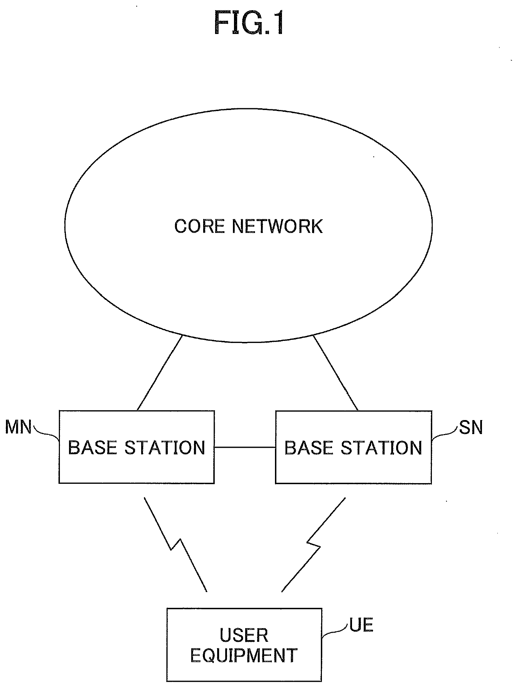

Fig. 1 illustrates a first exemplary configuration of a radio communication system (may be also referred to as a radio access network (RAT)) in the present embodiment.

The radio communication system as illustrated in Fig. 1 includes base stations MN and SN, each of which is connected to a core network and supports dual connectivity to user equipment UE. Further, communication between the base stations MN and SN can be performed via an X2 interface, for example. Note that MN is an abbreviation for "master node" and SN is an abbreviation of "secondary node".

For example, the base station MN may perform radio communication complying with LTE and the base station SN may perform radio communication complying with NR. However, this is merely an example and the base station MN may perform radio communication complying with NR and the base station SN may perform radio communication complying with LTE. Alternatively, both of the base stations MN and SN may perform radio communication complying with LTE or NR.

Fig. 1 illustrates an example where the number of base stations simultaneously communicating with the user equipment UE is two. However, this is also an example, and the number of base stations simultaneously communicating with the user equipment UE may be three or more. Architecture in which the user equipment UE communicates with two or more base stations may be referred to as multi-connectivity.

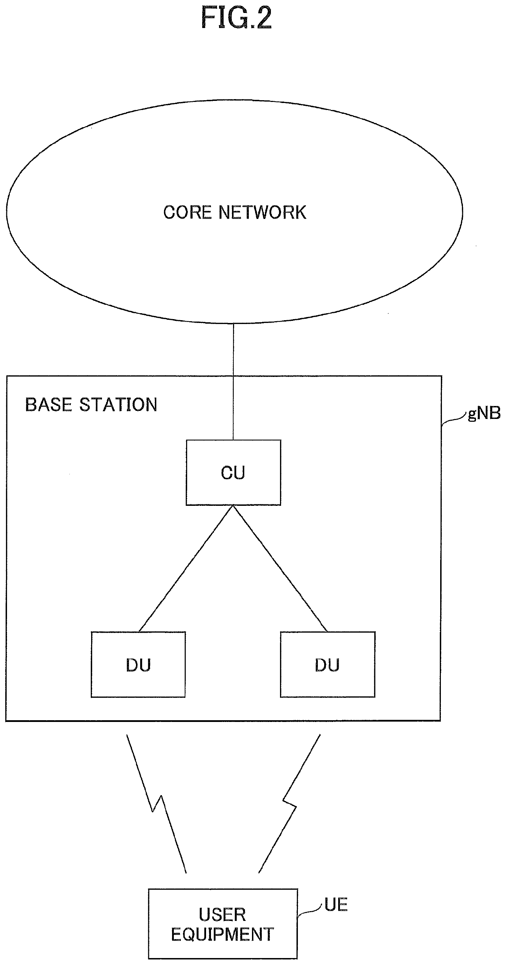

Fig. 2 illustrates a second exemplary configuration of a radio communication system in the present embodiment.

The radio communication system as illustrated in Fig. 2 includes an NR base station gNB connected to a core network. The NR base station gNB includes a central unit CU and a plurality of distributed units DUs attached to the CU for extension. Connections between the central unit CU and the DUs are implemented by an optical fiber, for example.

With respect to radio interface protocols, functional separation between the central unit CU and the distributed unit DU is implemented. For example, the central unit CU has a function of a PDCP layer and each of the distributed units DUs has functions of RLC, MAC, PHY, and RF layers. However, this is merely an example, and each of the distributed units DUs may have a part of the function of the PDCP layer, for example. The user equipment UE has functions of the RF-PDCP layers.

Fig. 2 illustrates an example where the number of central units CUs is one and the number of distributed units DUs is two. However, this is merely an example, and the number of central units CUs may be two or more and the number of distributed units DUs may be one or three or more.

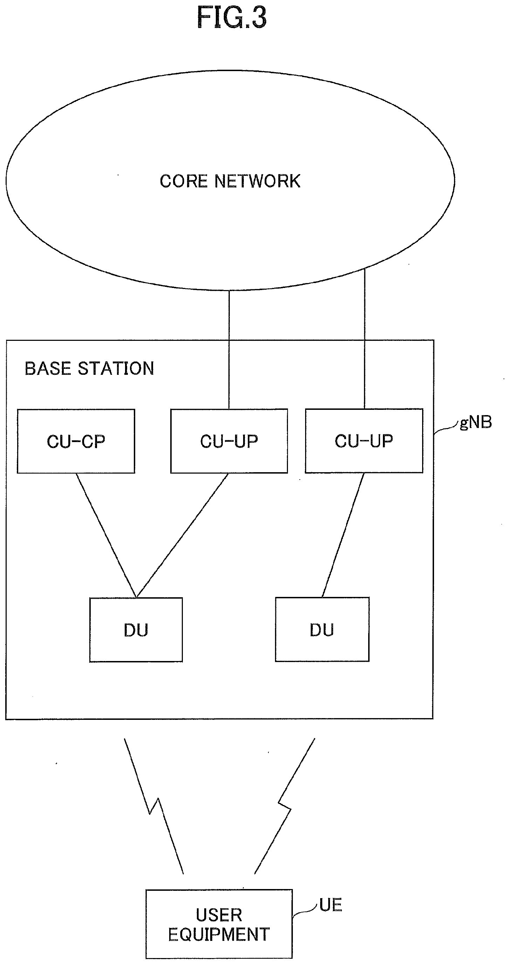

Fig. 3 illustrates a third exemplary configuration of a radio communication system in the present embodiment.

The radio communication system as illustrated in Fig. 3 includes an NR base station gNB connected to a core network. The NR base station gNB includes a central unit CU and a plurality of distributed units DUs attached to the CU for extension. Functional separation of the central unit CU is further implemented, and a CU-CP has a function of a control plane (CP) and a CU-UP has a function of a user plane (UP).

Fig. 3 illustrates an example where the number of control plane central units CU-CPs is one, the number of user plane central units is two, and the number of distributed units DUs is two. However, this is merely an example, and the number of control plane central units CU-CPs may be two or more, the number of user plane central units CU-UPs may be one or three or more, and the number of distributed units DUs may be one or three or more.

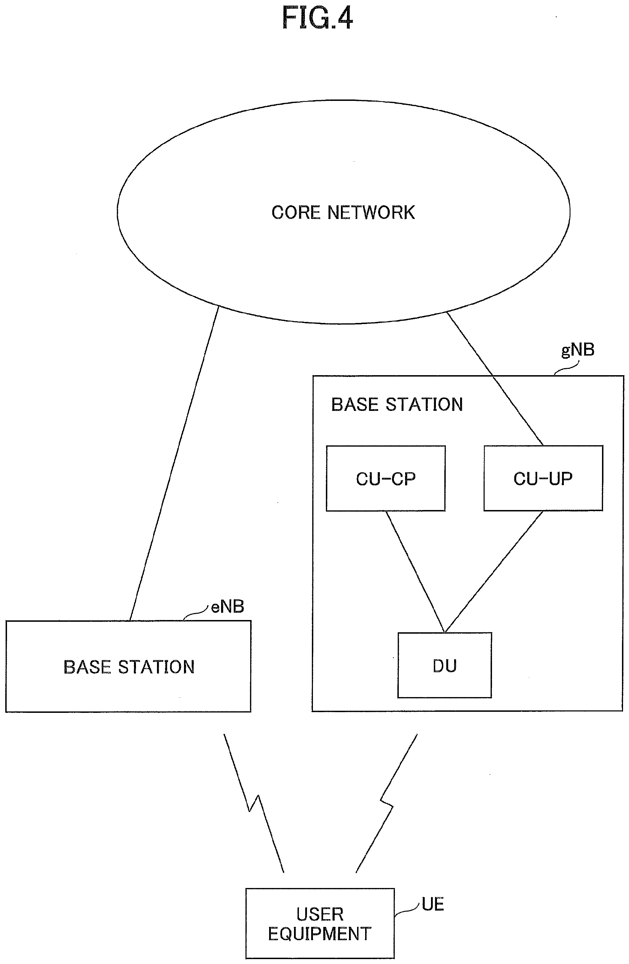

Fig. 4 illustrates a fourth exemplary configuration of a radio communication system in the present embodiment. In Fig. 4, the NR base station in Fig. 1 is formed by a control plane central unit CU-CP, a user plane central unit CU-UP, and a distributed unit DU, for example.

In the radio communication system in any of Figs. 1-4, the PDCP layer protocol of the user equipment UE is terminated at the PDCP layer in any one of the communication apparatuses. In the example illustrated in Fig. 1, one of the base stations MN and SN is a node (the node hosting PDCP) with the function of the PDCP layer, and the other is a node (the corresponding node) with the functions of the RLC layer and lower layers. In the example illustrated in Fig. 2, the central unit CU is a node with the function of the PDCP layer, and the distributed unit DU is a node with the functions of the RLC layer and lower layers. In the example illustrated in Fig. 3, the user plane central unit CU-UP is a node with the function of the PDCP layer, and the distributed unit DU is a node with the functions of the RLC layer and lower layers. In the example illustrated in Fig. 4, one node of the base station eNB and the base station gNB (CU-UP) is a node with the function of the PDCP layer, and the other node (the distributed unit DU in the case of the base station gNB) is a node with the functions of the RLC layer and lower layers.

Note that the node with the functions of the RLC layer and lower layers may be a node with all (RLC, MAC, PHY, and RF) of the functions of the RLC layer and lower layers or a node with part (for example, PHY and RF) of the functions of the RLC layer and lower layers.

UL data transmission in which the user equipment UE communicates with a plurality of communication apparatuses is described below. In the example illustrated in Fig. 1, the user equipment UE can transmit UL data to the base stations MN and SN. For example, the user equipment UE can transmit UL data up to a predetermined threshold to one of the base stations. When the amount of data exceeds the predetermined threshold, the user equipment UE can transmit UL data to the other base station. The base stations MN and SN can set, to primaryPath in PDCP configuration information (PDCP-Config), information about a base station to which the user equipment UE preferentially transmits UL data and further set the predetermined threshold to ul-DataSplitThreshold in the PDCP-Config (Non-Patent Document 2). Similarly, in Figs. 2-4, the user equipment UE can transmit UL data according to the PDCP-Config.

In the present specification, "data" (including UL data) are intended to be PDCP PDU(s), but not limited thereto. For example, "data" may be IP packet(s), RLC PDU(s), or MAC PDU(s). Also, "data" may be referred to as "packet(s)", "data unit(s)", or "frame(s)".

As described above, it is intended in the present embodiment to use PDCP PDU(s) as data. First, an operation in the PDCP layer is described below.

On the transmission side denoted as Tx (for example, transmission from the user equipment to the base station MN or SN), a PDCP entity performs robust header compression (ROHC) and ciphering (security) of an IP packet and a PDCP PDU is output to an RLC entity. On the reception side denoted as Rx, header decompression, deciphering, integrity check, and so on are performed corresponding to the operations on the transmission side. Further, in the case of handover, the transmission side retransmits unacknowledged user data to avoid a packet loss and the reception side detects duplication and performs ordering.

In the exemplary operation as described below, an embodiment is described using the base station MN as an example of a first communication apparatus and the base station SN as an example of a second communication apparatus. However, the present invention is not limited to the configuration including the base stations MN and SN, but is also applicable to a configuration including a plurality of communication apparatuses (for example, a configuration including a plurality of distributed units DUs, and a configuration including a base station eNB and a plurality of distributed units DUs in a base station gNB, and so on) as illustrated in Figs. 2-4.

### (Exemplary Operation)

In the present embodiment, an example where the base station MN is a node (the node hosting PDCP) with the function of the PDCP layer is described.

When the user equipment UE needs to communicate with a plurality of communication apparatuses, information about uplink quality from the user equipment to each communication apparatus is required to suitably set a parameter (for example, primaryPath and/or ul-DataSplitThreshold) to which the user equipment UE refers for transmitting UL data.

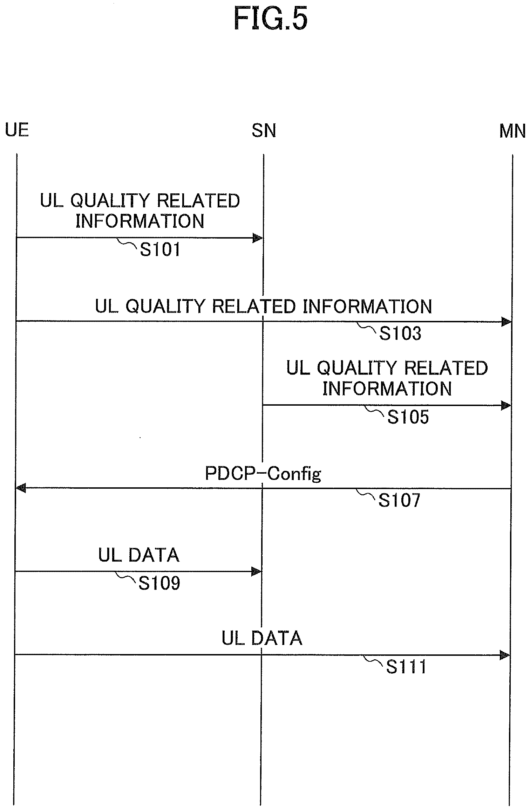

With reference to Fig. 5, the basic operation is described. First, the base station SN obtains information (hereinafter referred to as UL quality related information) about UL communication from the user equipment UE to the base station SN (S101). Similarly, the base station MN obtains, the base station SN, UL quality related information from the user equipment UE to the base station MN (S103). The UL quality related information may be quality obtained by measuring a signal intensity or the like by the base stations MN and SN, or may be quality estimated from some kinds of information. For example, the UL quality related information may be any of (1) a power headroom (PH), (2) received quality of an UL signal (for example, a sounding reference signal (SRS)), and (3) a data rate.
(1) The following description provides in detail the case where a PH is used.

Since transmission power used by the user equipment UE to transmit data to the base stations MN and SN needs to be appropriately controlled, the user equipment UE calculates UL transmission power using a predetermined equation and performs UL transmission with the calculated UL transmission power. In order to calculate UL transmission power, a pathloss is used.

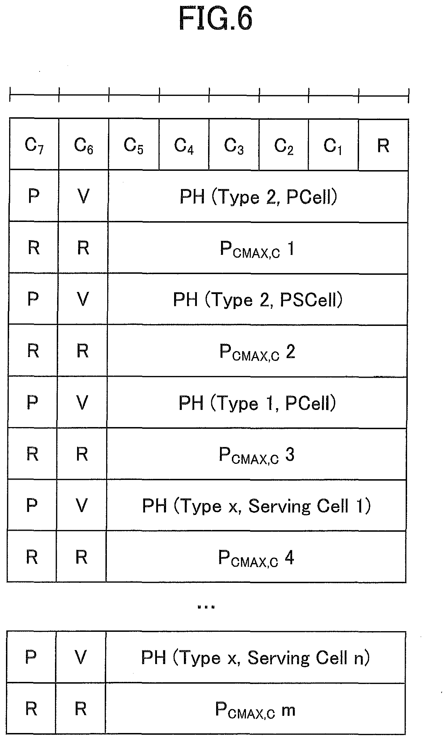

The base stations MN and SN also perform power control and scheduling (resource allocation, MCS determination, and so on) so that transmission power of the user equipment UE is appropriately controlled. For this reason, the base stations MN and SN grasp transmission power of the user equipment UE based on the same equation used by the user equipment UE. However, since the base stations MN and SN do not know the pathloss, the user equipment UE transmits a power headroom report (PHR) signal to the base stations MN and SN according to a predetermined trigger (for example, when the change of the pathloss exceeds a predetermined value). The base stations MN and SN control transmission power of the user equipment UE based on the PHR signal. Since a PH relates to a pathloss that is UL quality, the base stations MN and SN can use a PH as UL quality related information. Fig. 6 illustrates a PHR MAC CE format that is a format of the PHR signal. The base stations MN and SN can obtain a PH in each cell by means of this format.

(2) The following description provides the case where received quality of an UL signal is used. This case falls outside the scope of the claims.

The base stations MN and SN measure UL received quality using a quality measurement signal (for example, SRS) transmitted from the user equipment UE, in order to appropriately perform scheduling. Thus, received quality which is actually measured by the base stations MN and SN can be used as UL quality related information.

(3) The following description provides the case where a data rate is used. This case falls outside the scope of the claims.

The base stations MN and SN can measure an actual data rate based on the amount of UL data received per unit time. Alternatively, the base stations MN and SN can calculate, based on received quality, an estimated data rate which can be achieved in the presence of UL data. Thus, an actual data rate or an estimated data rate can be used as UL quality related information.

Then, the base station SN transmits the UL quality related information to the base station MN and the base station MN receives the UL quality related information from the base station SN (S105). Consequently, the base station MN can collect the UL quality related information with respect to both a bearer between the user equipment UE and the base station MN and a bearer between the user equipment UE and the base station SN.

Note that, according to the invention as claimed, the base station SN collectively transmits UL quality related information with respect to both the bearers (i.e., UL quality related information between the user equipment UE and the base station SN and UL quality related information between the user equipment UE and the base station MN) to the base station MN.

In an alternative that is outside of the scope of the claims the base station SN transmits UL quality information only with respect to a bearer established for the base station SN (i.e., UL quality related information between the user equipment UE and the base station SN) to the base station MN.

The base station SN may convert UL quality related information into an index value and transmit the index value, or may divide the information into cell-based information items and transmit them.

Then, the base station MN controls UL data transmission by the user equipment UE based on the UL quality related information. Specifically, the base station MN sets primaryPath and ul-DataSplitThreshold in PDCP-Config as parameters to which the user equipment UE refers for transmitting UL data and transmits the PDCP-Config to the user equipment UE (S107). Since the base station MN can identify not only the UL quality related information between the user equipment UE and the base station MN but also the UL quality related information between the user equipment UE and the base station SN, the base station MN sets a bearer with better quality to primaryPath, for example. For example, (1) when a PH is used as UL quality related information, a bearer with a larger PH, in other words, a bearer with a lower pathloss is set to primaryPath. In a frequency band (FR1) below 6 GHz in NR, maximum transmission power of the user equipment UE is defined as a sum of transmission power in LTE and transmission power in NR. For this reason, when UL data are preferentially transmitted to a base station with a larger PH, transmission power of the user equipment UE can be reduced. Alternatively, (2) when received quality of an UL signal is used as UL quality related information, a bearer with better received quality is set to primaryPath. Alternatively, (3) when a data rate is used as UL quality related information, a bearer with a higher data rate is set to primaryPath. Further, the base station MN determines a value of ul-DataSplitThreshold in consideration of the amount of data that can be transmitted with the bearer defined by primaryPath.

The user equipment UE transmits UL data according to the PDCP-Config (S109, 5111). For example, when the PDCP-Config specifies that primaryPath is a direction to the base station SN, the user equipment UE transmits data with the data amount up to ul-DataSplitThreshold to the base station SN and transmits data whose amount exceeds ul-DataSplitThreshold to the base station MN.

In the exemplary operation as described above, the base station MN is a node with the function of the PDCP layer. The present embodiment can be also applied to the case when the base station SN is a node with the function of the PDCP layer. In this case, the base station SN receives UL quality related information from the base station MN and sets PDCP-Config in a similar manner.

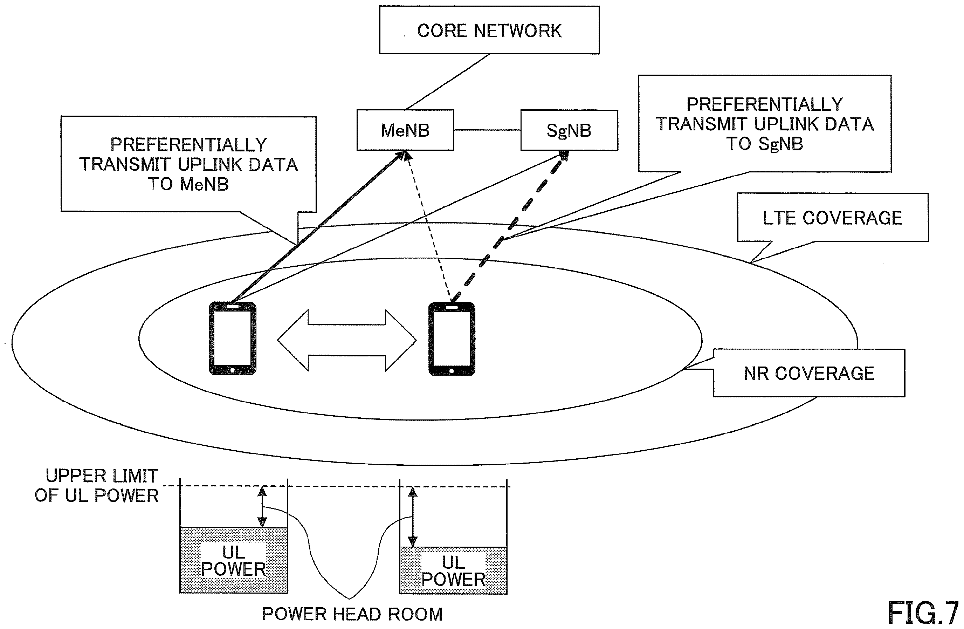

With reference to Fig. 7, a specific example of UL data transmission control is further described. For example, it is assumed that user equipment UE communicates with an LTE base station eNB that is an MN (denoted by MeNB) and an NR base station gNB that is an SN (denoted by SgNB). Further, it is assumed that LTE coverage is sufficiently larger than NR coverage for the user equipment UE and the user equipment UE can perform communication according to LTE even in a place where quality of NR is not sufficient.

When the user equipment UE is situated in the edge of NR coverage (the left side in Fig. 7), a pathloss to the base station SgNB is high and a PH of the user equipment UE is small. In this situation, primaryPath in PDCP-Config is set to a direction to the base station MeNB and thus UL data are preferentially transmitted to the base station MeNB.

On the other hand, when the user equipment UE moves close to the center of NR coverage (the right side in Fig. 7), the pathloss to the base station SgNB becomes low and the PH of the user equipment UE becomes large. In this situation, primaryPath in PDCP-Config is set to a direction to the base station SgNB and thus UL data are preferentially transmitted to the base station SgNB.

### (Supplementary Remarks on Exemplary Operation)

In the exemplary operation as described above, the user equipment UE communicates with two communication apparatuses. However, as described with reference to Figs. 1-4, the number of communication apparatuses with which the user equipment UE communicates may be one or three or more.

Further, in the exemplary operation as described above, the node (the node hosting PDCP) with the function of PDCP layer collects UL quality related information. However, a node which collects UL quality related information may be a node which terminates radio resource control (RRC). In Fig. 1, for example, when the base station SN is a node with the function of the PDCP layer, the base station MN which terminates RRC may collect UL quality related information and determine a parameter in PDCP-Config. Alternatively, a node which collects UL quality related information may be a control plane central unit CU-CP or a user plane central unit CU-UP. In Fig. 3, for example, the control plane central unit CU-CP may collect, via the user plane central units CU-UPs, UL quality related information obtained by the distributed units DUs, and determine a parameter in PDCP-Config. In Fig. 4, for example, the user plane central unit CU-UP may collect UL quality related information obtained by the distributed unit DU and the base station eNB, determine a parameter in PDCP-Config, and transmit it to the control plane central unit CU-CP. Alternatively, a node such as an element management system (EMS) or a network management system (NMS) other than RAN nodes may collect UL quality related information and determine a parameter in PDCP-Config.

Further, the node which collects UL quality related information may be changed while the user equipment UE performs communication. For example, when the node with the function of the PDCP layer is changed due to a change in a bearer type or due to handover, the node which collects UL quality related information may be also changed.

In addition, UL quality related information may be transmitted from a node which has obtained the UL quality related information based on polling by a node which collects the UL quality related information. Alternatively, UL quality related information may be autonomously transmitted from a node which collects the UL quality related information. For example, UL quality related information may be periodically transmitted or may be transmitted when an event occurs (for example, when a value of UL quality related information exceeds a predetermined threshold).

Further, when a bearer on which UL data are not transmitted is established, UL quality related information with respect to this bearer may not be transmitted to a node which collects UL quality related information. In other words, UL quality related information may be collected when user equipment transmits UL data, whereas UL quality related information may not be collected when user equipment does not transmit UL data. For example, in the configuration of Fig. 1, when only a bearer for the LTE base station is used (in the case of Option 2x), the user equipment UE does not transmit UL data to the NR base station. Alternatively, for example, when the user equipment is situated in a cell where only a DL band can be used, when only a DL bearer is established in carrier aggregation, or the like, the user equipment UE does not transmit UL data. Further, for example, even when an UL bearer is established, the user equipment UE may transmit only an SRS without transmitting UL data. In these situations, UL quality related information with respect to a bearer on which the user equipment UE does not transmit UL data may not be collected.

### (Apparatus Configuration)

Next, a configuration example of each function of the user equipment UE, the base station MN, the base station SN, the central unit CU, and the distributed unit DN as communication apparatuses for executing the above-described operations is described. When there are a plurality of distributed units DUs, each of the distributed units DUs has the same configuration and the above-described operations can be performed by each of the distributed units UEs. Each of the apparatuses has all the functions described in the present embodiment. However, each of the apparatuses may have only part of all the functions described in the present embodiment.

### <User Equipment UE>

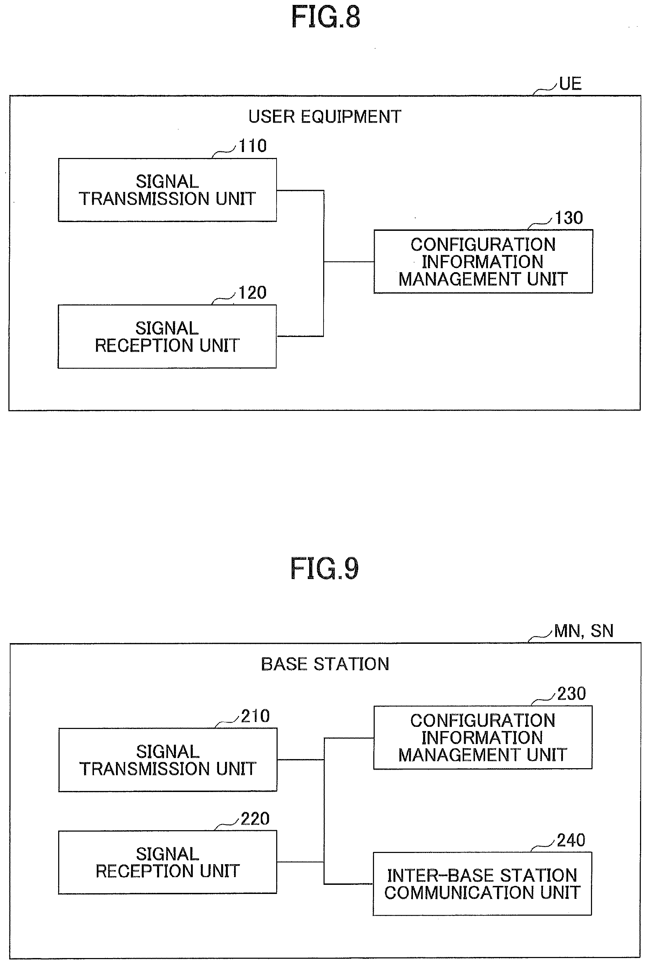

Fig. 8 is a diagram illustrating an exemplary functional configuration of the user equipment UE. The user equipment UE includes a signal transmission unit 110, a signal reception unit 120, and a configuration information management unit 130. The functional configuration illustrated in Fig. 8 is merely an example. The functional division and names of the functional units are not limited to the example illustrated in Fig. 8 as long as the operations according to the embodiment can be performed.

The signal transmission unit 110 is configured to generate a lower-layer signal from higher-layer information and wirelessly transmit the signal. The signal reception unit 220 is configured to wirelessly receive various signals and obtain higher-layer information from the received signals.

The configuration information management unit 130 stores predefined configuration information and the configuration information dynamically and/or semi-statically provided from the base station MN or SN or the like.

For example, the user equipment UE communicates with a plurality of communication apparatuses including first and second communication apparatuses. The signal reception unit 120 receives from one or both of the first and second communication apparatuses a parameter (for example, primaryPath and ul-DataSplitThreshold) to which the user equipment UE refers for transmitting UL data and stores the parameter in the configuration information management unit 130. The signal transmission unit 110 transmits UL data according to the parameter stored in the configuration information management unit 130.

### <Functional Configuration of Base Station MN/SN>

Fig. 9 is a diagram illustrating an exemplary functional configuration of a base station (hereinafter referred to as MN/SN) which can be used by any of the base station MN and the base station SN. The base station MN/SN includes a signal transmission unit 210, a signal reception unit 220, and a configuration information management unit 230. The functional configuration illustrated in Fig. 9 is merely an example. The functional division and names of the functional units are not limited to the example illustrated in Fig. 9 as long as the operations according to the embodiment can be performed.

The signal transmission unit 210 is configured to generate a lower-layer signal from higher-layer information and wirelessly transmit the signal. The signal reception unit 220 is configured to wirelessly receive various signals and obtain higher-layer information from the received signals.

The configuration information management unit 230 includes a storage unit and stores predefined configuration information. The configuration information management unit 230 also determines configuration information to be dynamically and/or semi-statically provided to the user equipment UE and stores the configuration information. The inter-base station communication unit 240 communicates with another base station.

For example, the base station illustrated in Fig. 9 is a base station used as a second communication apparatus when the user equipment UE communicates with both a first communication apparatus and the second communication apparatus. The inter-base station communication unit 240 transmits UL quality related information (for example, a PH, received quality, or a data rate) of the user equipment UE to the first communication apparatus.

Alternatively, for example, the base station illustrated in Fig. 9 is a base station used as a first communication apparatus when the user equipment UE communicates with both the first communication apparatus and a second communication apparatus. The inter-base station communication unit 240 receives UL quality related information (for example, a PH, received quality, or a data rate) of the user equipment UE from the second communication apparatus.

The configuration information management unit 230 determines configuration information (for example, PDCP-Config including primaryPath and ul-DataSplitThreshold) for controlling UL data transmission by the user equipment UE based on the UL quality related information and stores the configuration information.

### <Central Unit CU>

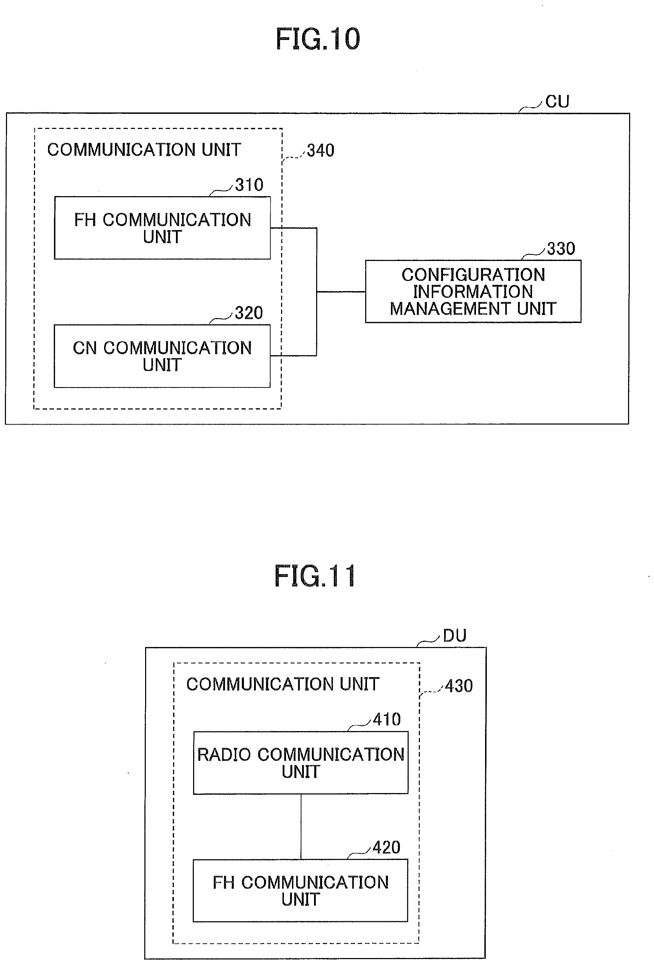

Fig. 10 is a diagram illustrating an exemplary functional configuration of the central unit CU. The central unit CU includes a front-haul (FH) communication unit 310, a core network (CN) communication 320, and a configuration information management unit 330. The combination of the FH communication unit 310 and the CN communication unit 320 is referred to as a communication unit 340. The functional configuration illustrated in Fig. 10 is merely an example. The functional division and names of the functional units are not limited to the example illustrated in Fig. 10 as long as the operations according to the embodiment can be performed.

The FH communication unit 310 communicates with the distributed unit DU. The CN communication unit 320 communicates with the core network.

For example, the central unit CU illustrated in Fig. 10 is a node used as a first communication apparatus when the user equipment UE communicates with the first communication apparatus and a second communication apparatus. The FH communication unit 310 receives UL quality related information (for example, a PH, received quality, or a data rate) of the user equipment UE from the distributed unit DU.

The configuration information management unit 330 determines configuration information (for example, PDCP-Config including primaryPath and ul-DataSplitThreshold) for controlling UL data transmission by the user equipment UE based on the UL quality related information and stores the configuration information.

### <Distributed Unit DU>

Fig. 11 is a diagram illustrating an exemplary functional configuration of the distributed unit DU. The distributed unit DU includes a radio communication unit 410 and an FH communication unit 420. The combination of the radio communication unit 410 and the FH communication unit 420 is referred to as a communication unit 430. The functional configuration illustrated in Fig. 11 is merely an example. The functional division and names of the functional units are not limited to the example illustrated in Fig. 11 as long as the operations according to the embodiment can be performed.

The radio communication unit 410 performs radio communication with the user equipment UE. The FH communication unit 420 communicates with the central unit CU.

For example, the distributed unit DU illustrated in Fig. 11 is a node used as a first communication apparatus when the user equipment UE communicates with the first communication apparatus and a second communication apparatus. The FH communication unit 420 transmits UL quality related information (for example, a PH, received quality, or a data rate) of the user equipment UE to the central unit CU.

### <Hardware Configuration>

The block diagrams (Figs. 8-11) used to describe the above-mentioned embodiment illustrate blocks of functional units. The functional blocks (components) are implemented by an arbitrary combination of hardware and/or software. A means for implementing each functional block is not particularly limited. That is, each functional block may be implemented by one apparatus in which a plurality of elements are physically and/or logically coupled or by a plurality of apparatuses that are physically and/or logically separated from each other and are connected directly and/or indirectly (for example, in a wired manner and/or wirelessly).

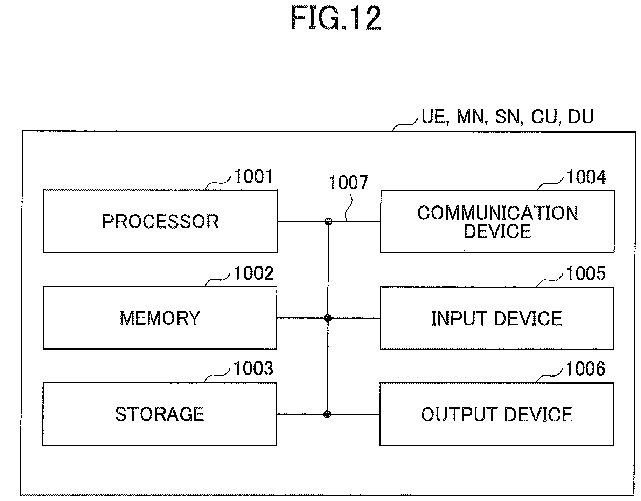

For example, any of the user equipment UE, the base station MN, the base station SN, the central unit CU, and the distributed unit DU according to the embodiment of the invention may function as a computer that performs the operations according to this embodiment. Fig. 12 is a diagram illustrating an example of a hardware configuration of the user equipment UE, the base station MN, the base station SN, the central unit CU, or the distributed unit DU according to this embodiment. Each of the user equipment UE, the base station MN, the base station SN, the central unit CU, and the distributed unit DU may be physically configured as a computer device including, for example, a processor 1001, a memory 1002, a storage 1003, a communication device 1004, an input device 1005, an output device 1006, and a bus 1007.

In the following description, the term "device" can be substituted with, for example, a circuit, an apparatus, or a unit. The hardware configuration of user equipment UE, the base station MN, the base station SN, the central unit CU, or the distributed unit DU may include one or a plurality of devices illustrated in Fig. 12 or may not include some of the devices.

Each function of the user equipment UE, the base station MN, the base station SN, the central unit CU, and the distributed unit DU may be implemented by the following process: predetermined software (program) is read onto hardware such as the processor 1001 or the memory 1002, and the processor 1001 performs an operation to control the communication of the communication device 1004 and the reading and/or writing of data from and/or to the memory 1002 and the storage 1003.

The processor 1001 operates, for example, an operating system to control the overall operation of the computer. The processor 1001 may be a central processing unit (CPU) including, for example, an interface with peripheral devices, a control device, an arithmetic device, and a register.

The processor 1001 reads a program (program code), a software module, and/or data from the storage 1003 and/or the communication device 1004 to the memory 1002 and performs various types of processes according to the program, the software module, or the data. A program that causes a computer to perform at least some of the operations described in the embodiment may be used. For example, each function of the user equipment UE, the base station MN, the base station SN, the central unit CU, and the distributed unit DU may be implemented by a control program that is stored in the memory 1002 and is executed by the processor 1001. In the embodiment, the above-mentioned various processes are performed by one processor 1001. However, the processes may be simultaneously or sequentially performed by two or more processors 1001. The processor 1001 may be mounted on one or more chips. The program may be transmitted over the network through a telecommunication line.

The memory 1002 is a computer-readable recording medium and may include, for example, at least one of a read only memory (ROM), an erasable programmable ROM (EPROM), an electrically erasable programmable ROM (EEPROM), and a random access memory (RAM). The memory 1002 may be also referred to as, for example, a register, a cache, or a main memory (main storage device). The memory 1002 can store, for example, an executable program (program code) and a software module that can perform a random access method according to the embodiment of the invention.

The storage 1003 is a computer-readable recording medium and may include, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. The storage 1003 may be also referred to as an auxiliary storage device. The above-mentioned storage medium may be, for example, a database, a server, and other suitable media including the memory 1002 and/or the storage 1003.

The communication device 1004 is hardware (a transmission and reception device) for communicating with a computer through a wired and/or wireless network and is also referred to as, for example, a network device, a network controller, a network card, or a communication module. For example, the signal transmission unit, the signal reception unit, the communication unit, and the like in each apparatus may be implemented by the communication device 1004.

The input device 1005 is an input unit (for example, a keyboard, a mouse, a microphone, a switch, a button, or a sensor) that receives an input from the outside. The output device 1006 is an output unit (for example, a display, a speaker, or an LED lamp) that performs an output process to the outside. The input device 1005 and the output device 1006 may be integrated into a single device (for example, a touch panel).

The devices such as the processor 1001 and/or the memory 1002 are connected to each other via the bus 1007 for information communication. The bus 1007 may be a single bus or the devices may be connected to each other by different buses.

Each of the user equipment UE, the base station MN, the base station SN, the central unit CU, and the distributed unit DU may include hardware such as a microprocessor, a digital signal processor (DSP), an application specific integrated circuit (ASIC), a programmable logic device (PLD), and a field programmable gate array (FPGA). Some or all of the functional blocks may be implemented by the hardware. For example, the processor 1001 may be implemented by at least one of these hardware components.

### (Summary of Embodiments)

According to an embodiment of the present invention, there is provision for a first communication apparatus including:
a reception unit configured to receive information about uplink quality of user equipment from a second communication apparatus, when the user equipment communicates with both the first communication apparatus and the second communication apparatus; and
a control unit configured to control uplink data transmission by the user equipment based on the information about uplink quality.

According to this configuration, a transmission efficiency of uplink data in a radio communication system where user equipment communicates with a plurality of communication apparatuses can be improved.

The control unit may set a parameter to which the user equipment refers for transmitting uplink data, based on the information about uplink quality.

According to this configuration, the user equipment refers to the parameter set based on the information about uplink quality of the user equipment, and thus the uplink data can be preferentially transmitted to a communication apparatus with better quality.

The reception unit may receive a power headroom of the user equipment as the information about uplink quality.

Since the power headroom is information provided by the user equipment to the base station for transmission power control, the base station can control uplink data transmission by the user equipment using the power headroom without measuring uplink quality.

The reception unit may receive information about uplink quality between the user equipment and the first communication apparatus and information about uplink quality between the user equipment and the second communication apparatus as the information about uplink quality.

According to this configuration, information about uplink quality with respect to both the communication apparatuses can be received from each of the communication apparatuses. Thus, even if information about uplink communication quality of one communication apparatus cannot be received for some reasons (for example, if scheduling is suspended due to lack of power or network congestion), uplink data transmission by the user equipment can be controlled based on information with respect to both the communication apparatuses received from the other communication apparatus. It should be noted that information about uplink communication quality of each communication apparatus may be received from each communication apparatus.

The reception unit may receive the information about uplink quality from the second communication apparatus when the user equipment transmits uplink data to the second communication apparatus, and may not receive the information about uplink quality from the second communication apparatus when the user equipment does not transmit uplink data to the second communication apparatus.

According to this configuration, the amount of signaling of information about uplink quality between the communication apparatuses can be reduced when the user equipment does not transmit uplink data to one communication apparatus.

### (Supplement to the embodiment)

The embodiment of the present invention has been described above; however, the disclosed invention is not limited to the embodiment, and a person ordinarily skilled in the art will appreciate various variations, modifications, alternatives, replacements and the like. Specific examples of numerical values are used in the description in order to facilitate understanding of the invention, but these numerical values are merely examples, and any appropriate values may be used, unless otherwise indicated. Divisions of the described items in the above description are not essential to the present invention. Depending on necessity, subject matter described in two or more described items may be combined and used, and subject matter described in a described item may be applied to subject matter described in another described item (unless contradicted). A boundary of a functional unit or a processing unit in the functional block diagrams may not necessarily correspond to a boundary of a physical component. An operation by a plurality of functional units may be physically executed by a single component, or an operation of a single functional unit may be physically executed by a plurality of components. In the sequence charts described in the embodiment, the order can be arbitrarily changed, unless those are contradicted. For the convenience of description, the user equipment UE, the base station MN, the base station SN, the central unit CU, and the distributed unit DU are described by using the functional block diagrams; however, such apparatuses may be implemented in hardware, software, or combinations thereof. The software to be operated by the processor included in each apparatus in accordance with the embodiment of the present invention may be stored in any appropriate storage medium, such as a random access memory (RAM), a flash memory, a read-only memory (ROM), an EPROM, an EEPROM, a register, a hard disk drive (HDD), a removable disk, a CD-ROM, a database, a server, and so on.

Notification of information is not limited to the aspect/embodiment described in this specification, and may be given by another method. For example, the notification of information may be performed by physical layer signaling (for example, downlink control information (DCI), uplink control information (UCI)), higher layer signaling (for example, radio resource control (RRC) signaling, medium access control (MAC) signaling, broadcast information (master information block (MIB), system information block (SIB))), another signal, or a combination thereof. Further, the RRC signaling may be referred to as an RRC message and may be, for example, an RRC Connection Setup message, an RRC Connection Reconfiguration message, or the like.

Each aspect/embodiment described in the present specification may be applied to Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA 2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), a system using another appropriate system, and/or a next generation system developed based on these systems.

In each aspect/embodiment described in the specification, for example, the order of the processes in the procedure, the sequence, and the flowchart may be changed unless a contradiction arises. For example, for the method described in the specification, elements of various steps are presented in the exemplified order. However, the invention is not limited to the presented specific order.

In the specification, a specific operation performed by the base station eNB or gNB may be performed by an upper node of the base station eNB or gNB. Also, the specific operations performed by the base station eNB or gNB in the present specification may be performed by the base station gNB or eNB. In a network having one or a plurality of network nodes including the base station eNB or gNB, it is clearly understood that various operations performed for communication with the user equipment UE can be performed by the base station eNB or gNB and/or a network node (for example, including an MME or an S-GW without limitation) other than the base station eNB or gNB. The number of network nodes other than the base station eNB or gNB is not limited to one, and a plurality of other network nodes (for example, an MME and an S-GW) may be combined with each other.

The aspects/embodiments described in the specification may be individually used, may be combined, or may be switched during execution.

The user equipment UE can be also referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or several other appropriate terms.

The base station eNB or gNB may be referred to by those skilled in the art as a NodeB (NB), a base station, or several other appropriate terms.

The terms "determining" and "deciding" used in the specification include various operations. The terms "determining" and "deciding" can include, for example, "determination" and "decision" for judging, calculating, computing, processing, deriving, investigating, looking-up (for example, looking-up in a table, a database, or another data structure), and ascertaining operations. In addition, the terms "determining" and "deciding" can include "determination" and "decision" for receiving (for example, information reception), transmitting (for example, information transmission), input, output, and accessing (for example, accessing data in a memory) operations. The terms "determining" and "deciding" can include "determination" and "decision" for resolving, selecting, choosing, establishing, and comparing operations. That is, the terms "determining" and "deciding" can include "determination" and "decision" for any operation.

The term "based on" used in the specification does not mean "only based on" unless otherwise stated. In other words, the term "based on" means both "only based on" and "at least based on".

The terms "include" and "including" and the modifications thereof are intended to be inclusive, similarly to the term "comprising", as long as they are used in the specification or the claims. In addition, the term "or" used in the specification or the claims does not mean exclusive OR.

In the whole of the present disclosure, if an article such as "a", "an", and "the" in English, for example, is added by translation, an element to which the article is added can encompass a plurality of elements, unless otherwise indicated apparently in the context.

Although the present invention is described in detail, it is apparent to those skilled in the art that the present invention is not limited to the embodiment described in this specification. The present invention can be implemented as a modified and changed aspect without deviating from the spirit and scope of the present invention defined by the claims. Accordingly, the description of the present specification is given solely by way of illustration and does not have any restrictive meaning to the present invention.

### [DESCRIPTION OF NOTATIONS]

UE user equipment
MN, SN base station
CU central unit
DU distributed unit
110 signal transmission unit
120 signal reception unit
130 configuration information management unit
210 signal transmission unit
220 signal reception unit
230 configuration information management unit
240 inter-base station communication unit
310 FH communication unit
320 CN communication unit
330 configuration information management unit
340 communication unit
410 radio communication unit
420 FH communication unit
430 communication unit

## Claims

1. A first communication apparatus (MN) comprising:
a reception unit (240) configured to receive, from a second communication apparatus, information about uplink quality between a terminal and the first communication apparatus and information about the uplink quality between the terminal and the second communication apparatus as information about uplink quality of the terminal, when the terminal communicates with the first communication apparatus (MN) via the second communication apparatus (SN); and
a control unit (230) configured to control uplink data transmission by the terminal based on the information about uplink quality of the terminal.

2. The first communication apparatus (MN) as claimed in claim 1, wherein the control unit (230) is configured to set a parameter to which the terminal refers for transmitting uplink data, based on the information about uplink quality of the terminal.

3. The first communication apparatus (MN) as claimed in claim 1 or 2, wherein the reception unit (240) is configured to receive a power headroom of the terminal as the information about uplink quality of the terminal.

4. The first communication apparatus (MN) as claimed in any one of claims 1-3, wherein the reception unit (240) is configured to receive the information about uplink quality from the terminal from the second communication apparatus (SN) when the terminal transmits uplink data to the second communication apparatus (SN), and is configured to not receive the information about uplink quality from the terminal from the second communication apparatus (SN) when the terminal does not transmit uplink data to the second communication apparatus (SN).

5. A communication method performed by a first communication apparatus (MN), comprising the steps of:
receiving, from a second communication apparatus (SN), information about uplink quality between a terminal and the first communication apparatus (MN) and information about uplink quality between the terminal and the second communication apparatus (SN) as information about uplink quality of the terminal, when the terminal communicates with the first communication apparatus (MN) via the second communication apparatus (SN); and
controlling uplink data transmission by the terminal based on the information about uplink quality of the terminal.

6. A communication system including a first communication apparatus (MN) and a second communication apparatus (SN), wherein the second communication apparatus (SN) comprises:
a transmission unit configured to transmit, to the first communication apparatus (MN), information about uplink quality between a terminal and the first communication apparatus (MN) and information about uplink quality between the terminal and the second communication apparatus (SN) as information about uplink quality of the terminal, when the terminal communicates with the first communication apparatus (MN) via the second communication apparatus (SN);
wherein the first communication apparatus comprises (MN):
a reception unit configured to receive, from the second communication apparatus (SN), the information about uplink quality of the terminal; and
a control unit configured to control uplink data transmission by the terminal based on the information about uplink quality of the terminal.

## Patentansprüche

1. Erste Kommunikationsvorrichtung (MN), umfassend:
eine Empfangseinheit (240), die so konfiguriert ist, dass sie von einer zweiten Kommunikationsvorrichtung Informationen über eine Qualität einer Aufwärtsverbindung zwischen einem Endgerät und der ersten Kommunikationsvorrichtung und Informationen über die Qualität einer Aufwärtsverbindung zwischen dem Endgerät und der zweiten Kommunikationsvorrichtung als Informationen über die Aufwärtsverbindungsqualität des Endgeräts empfängt, wenn das Endgerät mit der ersten Kommunikationsvorrichtung (MN) über die zweite Kommunikationsvorrichtung (SN) kommuniziert; und
eine Steuereinheit (230), die so konfiguriert ist, dass sie eine Aufwärtsverbindungsdatenübertragung durch das Endgerät basierend auf den Informationen über die Aufwärtsverbindungsqualität des Endgeräts steuert.

2. Erste Kommunikationsvorrichtung (MN) nach Anspruch 1, wobei die Steuereinheit (230) so konfiguriert ist, dass sie einen Parameter, auf den sich das Endgerät für die Übertragung von Aufwärtsverbindungsdaten bezieht, basierend auf den Informationen über die Aufwärtsverbindungsqualität des Endgeräts einstellt.

3. Erste Kommunikationsvorrichtung (MN) nach Anspruch 1 oder 2, wobei die Empfangseinheit (240) so konfiguriert ist, dass sie eine Leistungsreserve des Endgeräts als die Information über die Aufwärtsverbindungsqualität des Endgerätes empfängt.

4. Erste Kommunikationsvorrichtung (MN) nach einem der Ansprüche 1-3, wobei die Empfangseinheit (240) so konfiguriert ist, dass sie die Informationen über Aufwärtsverbindungsqualität von dem Endgerät von der zweiten Kommunikationsvorrichtung (SN) empfängt, wenn das Endgerät Aufwärtsverbindungsdaten an die zweite Kommunikationsvorrichtung (SN) überträgt, und so konfiguriert ist, dass sie die Informationen über Aufwärtsverbindungsqualität von dem Endgerät von der zweiten Kommunikationsvorrichtung (SN) nicht empfängt, wenn das Endgerät keine Aufwärtsverbindungsdaten an die zweite Kommunikationsvorrichtung (SN) überträgt.

5. Kommunikationsverfahren, das von einer ersten Kommunikationsvorrichtung (MN) durchgeführt wird und die Schritte umfasst von:
Empfangen, von einer zweiten Kommunikationsvorrichtung (SN), von Informationen über eine Qualität einer Aufwärtsverbindung zwischen einem Endgerät und der ersten Kommunikationsvorrichtung (MN) und von Informationen über eine Qualität einer Aufwärtsverbindung zwischen dem Endgerät und der zweiten Kommunikationsvorrichtung (SN) als Informationen über eine Aufwärtsverbindungsqualität des Endgeräts, wenn das Endgerät mit der ersten Kommunikationsvorrichtung (MN) über die zweite Kommunikationsvorrichtung (SN) kommuniziert; und
Steuern der Aufwärtsverbindungsdatenübertragung durch das Endgerät basierend auf den Informationen über die Aufwärtsverbindungsqualität des Endgeräts.

6. Kommunikationssystem, das eine erste Kommunikationsvorrichtung (MN) und eine zweite Kommunikationsvorrichtung (SN) einschließt,
wobei die zweite Kommunikationsvorrichtung (SN) umfasst:
eine Übertragungseinheit, die so konfiguriert ist, dass sie an die erste Kommunikationsvorrichtung (MN) Informationen über eine Qualität einer Aufwärtsverbindung zwischen einem Endgerät und der ersten Kommunikationsvorrichtung (MN) und Informationen über eine Qualität einer Aufwärtsverbindung zwischen dem Endgerät und der zweiten Kommunikationsvorrichtung (SN) als Informationen über die Aufwärtsverbindungsqualität des Endgerätes überträgt, wenn das Endgerät mit der ersten Kommunikationsvorrichtung (MN) über die zweite Kommunikationsvorrichtung (SN) kommuniziert;
wobei die erste Kommunikationsvorrichtung (MN) umfasst:
eine Empfangseinheit, die so konfiguriert ist, dass sie von der zweiten Kommunikationsvorrichtung (SN) die Informationen über die Aufwärtsverbindungsqualität des Endgeräts empfängt; und
eine Steuereinheit, die so konfiguriert ist, dass sie eine Aufwärtsverbindungsdatenübertragung durch das Endgerät basierend auf den Informationen über die Aufwärtsverbindungsqualität des Endgerätes steuert.

## Revendications

1. Premier appareil de communication (MN) comprenant :
une unité de réception (240) configurée pour recevoir, en provenance d'un second appareil de communication, des informations relatives à une qualité de liaison montante entre un terminal et le premier appareil de communication et des informations relatives à la qualité de liaison montante entre le terminal et le second appareil de communication en tant qu'informations relatives à une qualité de liaison montante du terminal, lorsque le terminal communique avec le premier appareil de communication (MN) par le biais du second appareil de communication (SN) ; et
une unité de commande (230) configurée pour commander une transmission de données de liaison montante par le terminal sur base des informations relatives à la qualité de liaison montante du terminal.

2. Premier appareil de communication (MN) selon la revendication 1, dans lequel l'unité de commande (230) est configurée pour définir un paramètre auquel le terminal se réfère pour transmettre des données de liaison montante, sur base des informations relatives à la qualité de liaison montante du terminal.

3. Premier appareil de communication (MN) selon la revendication 1 ou la revendication 2, dans lequel l'unité de réception (240) est configurée pour recevoir une marge de puissance du terminal en tant qu'informations relatives à la qualité de liaison montante du terminal.

4. Premier appareil de communication (MN) selon l'une quelconque des revendications 1 à 3, dans lequel l'unité de réception (240) est configurée pour recevoir les informations relatives à la qualité de liaison montante du terminal en provenance du second appareil de communication (SN) lorsque le terminal transmet des données de liaison montante au second appareil de communication (SN), et est configurée pour ne pas recevoir les informations relatives à la qualité de liaison montante du terminal en provenance du second appareil de communication (SN) lorsque le terminal ne transmet pas de données de liaison montante au second appareil de communication (SN).

5. Procédé de communication mis en oeuvre par un premier appareil de communication (MN), comprenant les étapes destinées à :
recevoir, en provenance d'un second appareil de communication (SN), des informations relatives à une qualité de liaison montante entre un terminal et le premier appareil de communication (MN) et des informations relatives à une qualité de liaison montante entre le terminal et le second appareil de communication (SN) en tant qu'informations relatives à la qualité de liaison montante du terminal, lorsque le terminal communique avec le premier appareil de communication (MN) par le biais du second appareil de communication (SN) ; et
commander la transmission de données de liaison montante par le terminal sur base des informations relatives à la qualité de liaison montante du terminal.

6. Système de communication incluant un premier appareil de communication (MN) et un second appareil de communication (SN),
dans lequel le second appareil de communication (SN) comprend :
une unité de transmission configurée pour transmettre, au premier appareil de communication (MN), des informations relatives à une qualité de liaison montante entre un terminal et le premier appareil de communication (MN) et des informations relatives à une qualité de liaison montante entre le terminal et le second appareil de communication (SN) en tant qu'informations relatives à une qualité de liaison montante du terminal, lorsque le terminal communique avec le premier appareil de communication (MN) par le biais du second appareil de communication (SN) ;
dans lequel le premier appareil de communication comprend (MN) :
une unité de réception configurée pour recevoir, en provenance du second appareil de communication (SN), les informations relatives à une qualité de liaison montante du terminal ; et
une unité de commande configurée pour commander la transmission de données de liaison montante par le terminal sur base des informations relatives à une qualité de liaison montante du terminal.
